# EUROPEAN PATENT APPLICATION

(11) **EP 2 475 104 A1**
(43) Date of publication of application: **11.07.2012**
(21) Application number: 09848622.8
(22) Date of filing: 31.08.2009
(51) Int. Cl.: H04B 7/00, H04B 1/04, H04B 17/00

(54) **DUPLEXER MALFUNCTION DETECTING METHOD AND APPARATUS**

(71) Applicant: Huawei Technologies Co., Ltd., Shenzhen, Guangdong 518129 (CN)
(72) Inventor: HUANG, Lin, Shenzhen Guangdong 518129 (CN); CAI, Hua, Shenzhen Guangdong 518129 (CN); SHUAI, Songlin, Shenzhen Guangdong 518129 (CN); MA, Yingdong, Shenzhen Guangdong 518129 (CN); TANG, Zhenyu, Shenzhen Guangdong 518129 (CN)
(74) Representative: Epping - Hermann - Fischer
(86) International application number: PCT/CN2009/073641
(87) International publication number: WO 2011/022890

(57) **Abstract**

A method and a device for duplexer fault detection relating to the microwave communications technology are disclosed in the present invention to solve the problem in the prior art that the performance of duplexers cannot be detected online. A method provided by the an embodiment of the present invention includes: receiving the detection voltage of the return wave signals of the duplexer, the return wave signals being part of the reflection signals generated at the input port of the duplexer by microwave signals that are input at the input port of the duplexer; judging whether the detection voltage of the return wave signals exceeds a reference threshold; and determining that the duplexer is faulty if the detection voltage of the return wave signals exceeds the reference threshold. The present invention can realize the detecting of the duplexer performance online.

## Description

### FIELD OF THE INVENTION

The present invention relates to microwave communication technologies, and in particular, to a method and a device for duplexer fault detection.

### BACKGROUND

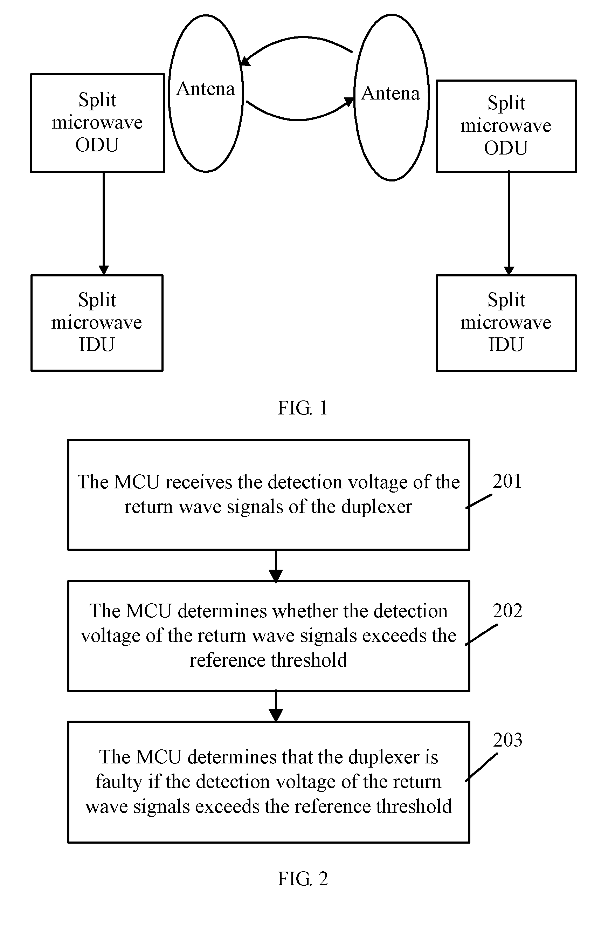

The split microwave system is a point-to-point communication system. The split microwave system includes a pair of equipments, namely, high station and low station. Both the high station and the low station include an Indoor Unit (IDU) and an Outdoor Unit (ODU). As shown in FIG 1, the IDU and the ODU in the high station and low station are connected through Intermediate Frequency (IF) cables and communicate with each other by sending IF signals. The transmitting end of the ODU is mainly used for frequency conversion and amplification of the IF signals. That is, up converting the IF signals sent by the IDU to the microwave frequency, amplifying the signals, and sending the signals to the peer end through antennas. The receiving end of the ODU is mainly used to amplify the received microwave signals, low convert the microwave signals to IF signals, and then send to the IDU through IF cables. The duplexer of the ODU includes two filters that have different passbands, mainly used to realize that the ODU receiving and sending modules co-share the key component of the antenna. There is a TR internal difference between the center frequencies of the two filters. TR interval is the difference between the transmitting frequency and the receiving frequency of the ODU.

In the process of the implementation of the present invention, the inventor finds that the current technology has at least the following problems: The duplexer of the ODU in the traditional split microwave system is an independent passive module, and its performance can only be checked manually, so that the performance of the duplexer cannot be detected online.

### SUMMARY

The embodiments of the present invention provide a method and a device for duplexer fault detection to detect a duplexer's performance online.

A duplexer fault detection method is provided in an embodiment of the present invention. The method includes:
receiving the detection voltage of the return wave signals of the duplexer, the return wave signals being part of the reflected signals generated at the input port of the duplexer by microwave signals that are input at the input port of the duplexer;
judging whether the detection voltage of the return wave signals exceeds the reference threshold; and
determining that the duplexer is faulty if the detection voltage of the return wave signals exceeds the reference threshold.

A duplexer fault detection device is provided in an embodiment of the present invention. The device includes:
a detection voltage acquiring unit, configured to receive the detection voltage of the return wave signals of the duplexer, the return wave signals being part of the reflected signals generated at the input port of the duplexer by microwave signals that are input at the input port of the duplexer;
a judging unit, configured to judge whether the detection voltage of the return wave signals exceeds the reference threshold; and
a fault output unit, configured to determine that the duplexer is faulty if the detection voltage of the return wave signals exceeds the reference threshold.

A method and a device for duplexer fault detection provided in the embodiments of the present invention relate to: receiving the detection voltage of the return wave signals of the duplexer, judging whether the detection voltage of the return wave signals exceeds the reference threshold, and determining that the duplexer is faulty if the detection voltage of the return wave signals exceeds the reference threshold. Therefore, by comparing the received detection voltage of the return wave signals and the reference threshold, it is determined that the duplexer is faulty if the detection voltage of the return wave signals exceeds the reference threshold, thereby realizing the online detection of the performance of duplexers.

### BRIEF DESCRIPTION OF THE DRAWINGS

FIG 1 shows a schematic structural diagram of the split microwave system in the existing technology;
FIG 2 shows a flowchart of a method for duplexer fault detection in an embodiment of the present invention;
FIG 3 shows a flowchart of another method for duplexer fault detection in an embodiment of the present invention;
FIG 4 shows a flowchart of yet another method for duplexer fault detection in an embodiment of the present invention;
FIG 5 shows a schematic structural diagram of a device for duplexer fault detection in an embodiment of the present invention;
FIG 6 shows a schematic structural diagram of another device for duplexer fault detection in an embodiment of the present invention;
FIG 7 shows a schematic structural diagram of yet another device for duplexer fault detection in an embodiment of the present invention;
FIG 8 shows a schematic structural diagram of a detection device in an embodiment of the present invention;
FIG 9 shows a schematic structural diagram of another detection device in an embodiment of the present invention;
FIG 10 shows a schematic structural diagram of an ODU that realizes online duplexer detection in an embodiment of the present invention; and
FIG 11 shows a schematic diagram of passbands of two sub-bands of a pair of high/low pass filters of the duplexer in an embodiment of the present invention.

### DETAILED DESCRIPTION

A method and a device of duplexer fault detection are provided in embodiments of the present invention. The following technical solution is adopted.

As shown in FIG 2, a method for duplexer fault detection is provided in an embodiment of the present invention to detect the performance of a duplexer online. The method includes the following steps.

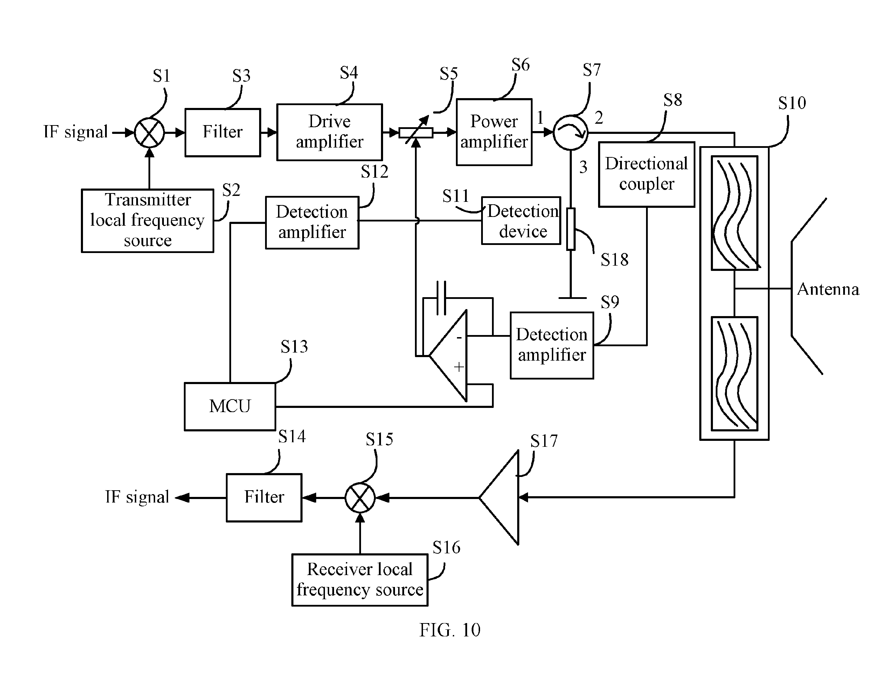

201: The Micro Controller Unit (MCU) receives the detection voltage of the return wave signals of the duplexer. The return wave signals are part of the reflected signals generated at the input port of the duplexer by microwave signals that are input at the input port of the duplexer. The process of acquiring the detection voltage of the return wave signals of the duplexer by the MCU is: first, acquiring the return wave signals of the duplexer by setting the detection device that is configured at port 3 of the circulator as shown in FIG 10; then, performing detection amplification on the acquired return wave signals by a detection amplifier, acquiring the detection voltage of the return wave signals, and finally sending the detection voltage of the return wave signals to the MCU.

202: The MCU judges whether the detection voltage of the return wave signals exceeds the reference threshold. The reference threshold can be preset in the reference threshold table. When the duplexer works in normal state, the return wave signals are weak. Thus, the detection voltage of the return wave signals is low. When the return wave signals are strong, the detection voltage acquired by the MCU is high. If the detection voltage exceeds the reference threshold preset in the MCU, it is determined that the duplexer is faulty.

Acquiring the reference threshold can be accomplished by using the conventional method for detecting the detection voltage to detect the detection voltage of a duplexer which starts to be faulty.

203: If the detection voltage of the return wave signals exceeds the reference threshold, then it is determined that the duplexer is faulty.

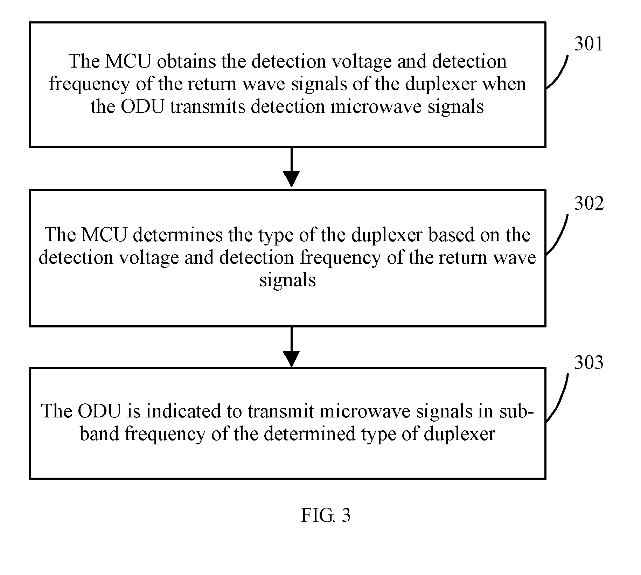

As shown in FIG 3, another method for duplexer fault detection is provided in an embodiment of the present invention to determine the type of the duplexer. The method includes the following steps.

301: When the ODU transmits detection microwave signals, the MCU acquires the detection voltage and detection frequency of the return wave signals from the duplexer. The implementation process is:
the MCU controls the transmission of detection microwave signal by ODU; the MCU records the frequency information of the detection microwave signal transmitted each time; then, the return wave signals of the duplexer are acquired by the detection device as shown in FIG 10; the return wave signals are detection amplified by a detection amplifier, acquiring the detection voltage of the return wave signals; finally, the MCU acquires the detection voltage and frequency of the return wave signals of the duplexer.

302: The MCU determines the type of the duplexer based on the detection voltage and detection frequency of the return wave signals. The implementation process includes the following steps.

The MCU judges whether the detection frequency of the return wave signals of the duplexer is the same as the reference frequency and whether the detection voltage of the return wave signals of the duplexer is the same as the reference voltage.

If the detection frequency is the same as the reference frequency and the detection voltage of the return wave signals of the duplexer is the same as the reference voltage, it is determined that the type of the detected duplexer is the same as the type corresponding to the reference voltage and reference frequency.

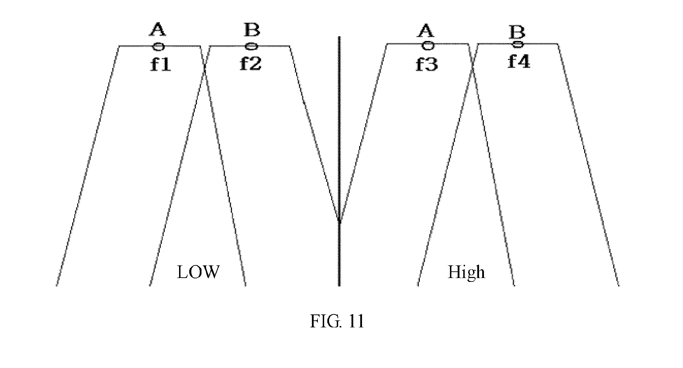

The reference voltage and reference frequency can be preset in the reference threshold table. The reference threshold table also includes the mapping relationship between the reference voltages and reference frequencies and the duplexer types, as shown in Table 1. The determination of the type of the duplexer is detailed described below with reference to Table 1 and FIG 11. The low level in Table 1 is a valid reference voltage value. That is, when the reference voltage is 0, the duplexer type corresponding to the reference voltage and corresponding reference frequency is the type of the detected duplexer.

303: Based on the determined type of the duplexer, the ODU is indicated to transmit microwave signals to the input port of the duplexer in the sub-band frequency of the duplexer type.

FIG 11 shows a schematic diagram of passbands of two sub-bands of a pair of high/low pass filters in a duplexer. LOW refers to two sub-bands A and B of the low station of the duplexer, and High refers to two sub-bands A and B of the high station of the duplexer. f1 is a certain frequency of the sub-band A of the low station of the duplexer; f2 is a certain frequency of the sub-band B of the low station of the duplexer; f3 is a certain frequency of the sub-band A of the high station of the duplexer; f4 is a certain frequency of the sub-band B of the high station of the duplexer. For example, when the duplexer works in normal state, if the MCU indicates the ODU to transmit detection microwave signals in frequency f1, the detected frequency of the return wave signals of the detection microwave signals is f1, the electrical level of the return wave signals is low level 0, then it is determined that the type of the duplexer is A sub-band low station according to Table 1 (which provides the reference thresholds corresponding to high/low station and sub-band configurations of different duplexers); if the electrical level of the return wave signals is high level 1, the MCU continues to indicate the ODU to transmit microwave signals in frequency f2; if the electrical level is still high level 1, it is possible to transmit microwave signals in frequency f3 and f4 sequentially until the type of the duplexer is determined.

**Table 1**

| Transmission frequency | f1 | f2 | f3 | f4 |
|---|---|---|---|---|
| Sub-band A low station | 0 | 1 | 1 | 1 |
| Sub-band A high station | 1 | 1 | 0 | 1 |
| Sub-band B low station | 1 | 0 | 1 | 1 |
| Sub-band B high station | 1 | 1 | 1 | 0 |

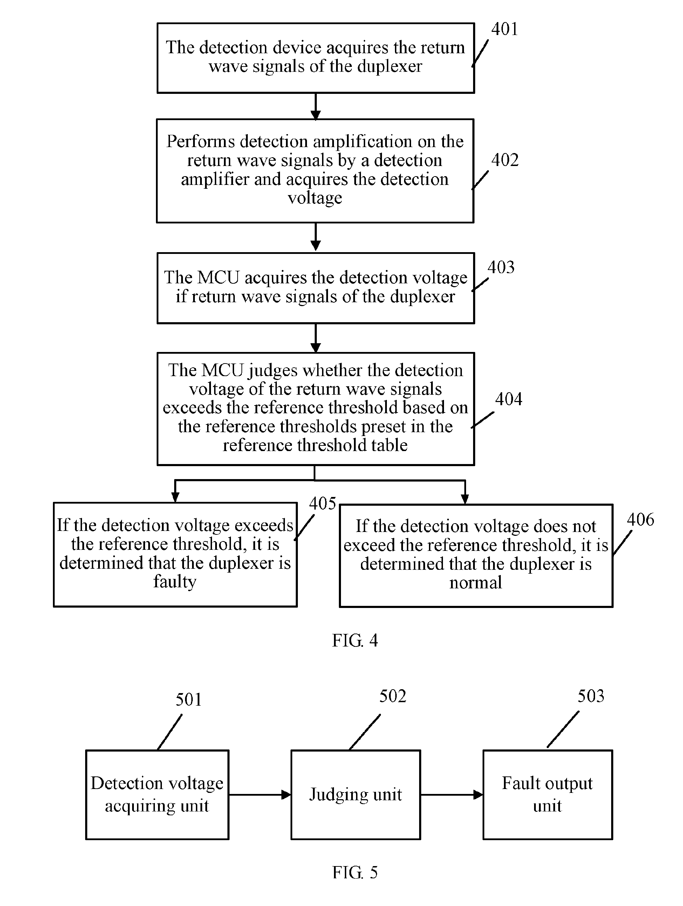

Based on the embodiment shown in FIG 3, after acquiring the type of the duplexer, the embodiment of the present invention can further detect the performance of the duplexer online, that is, detect the performance of the duplexer during the process of message-exchanging between the duplexer and the peer duplexer, as shown in FIG 4. The implementation process is as follows.

401: The detection device acquires the return wave signals of the duplexer. The return wave signals are part of the reflected signals generated at the input port (transmission port) of the duplexer by microwave signals that are input at the input port of the duplexer. The frequency of the microwave signals is the same as the frequency of the return wave signals of the type of duplexer determined in FIG 3. The implementation process is: as shown in FIG 10, a majority of the microwave signals are transmitted to the peer end through the duplexer, and a small portion of signal energy returned to the circulator and then absorbed by the absorbing load; the signals returned to the circulator are so-called reflected signals; on the path of the reflected signals reaching the absorbing load, namely, the detection device at port 3 of the circulator, the detection device couples a certain part of the reflected signals; this part of reflected signals is so-called return wave signals.

402: The acquired return wave signals are detection amplified by a detection amplifier and the detection voltage of the return wave signals is acquired. In detail, since the coupling degree of the detection device is fixed and known. Therefore, the size of the return wave signals amplified by the detection amplifier is in a linear relation with the size of the return wave signals.

403: The MCU receives the detection voltage of the return wave signals of the duplexer. The return wave signals are part of the reflection signals generated at the input port of the duplexer by microwave signals that are input at the input port of the duplexer.

404: The MCU judges whether the detection voltage of the return wave signals exceeds the reference threshold based on the reference thresholds preset in the reference threshold table.

405: If the detection voltage exceeds the reference threshold, it is determined that the duplexer is faulty.

406: If the detection voltage does not exceed the reference threshold, it is determined that the duplexer is normal.

As shown in FIG 5, a device for duplexer fault detection is provided in an embodiment of the present invention to detect the performance of a duplexer online. The device includes:
a detection voltage acquiring unit 501, configured to receive the detection voltage of the return wave signals of the duplexer, the return wave signals are part of the reflection signals generated at the input port of the duplexer by microwave signals that are input at the input port of the duplexer, and the process of acquiring the detection voltage of the return wave signals of the duplexer by the detection voltage acquiring unit 501 is: first, acquiring the return wave signals of the duplexer by the detection device that is configured at port 3 of the circulator as shown in FIG 10; then, performing detection amplification on the acquired return wave signals by the detection amplifier, acquiring the detection voltage of the return wave signals, and finally sending the detection voltage of the return wave signals to the detection voltage acquiring unit 501;
a judging unit 502, configured to judge whether the detection voltage of the return wave signals exceeds the reference threshold. The reference threshold can be preset in the reference threshold table. When the duplexer works in normal state, the return wave signals are weak. Thus, the detection voltage of the return wave signals is low. When the return wave signals are strong, the detection voltage of the return wave signals acquired by the MCU is high. If the detection voltage exceeds the reference threshold preset in the MCU, it is determined that the duplexer is faulty;
a fault output unit 503, configured to determine that the duplexer is faulty if the detection voltage of the return wave signals exceeds the reference threshold.

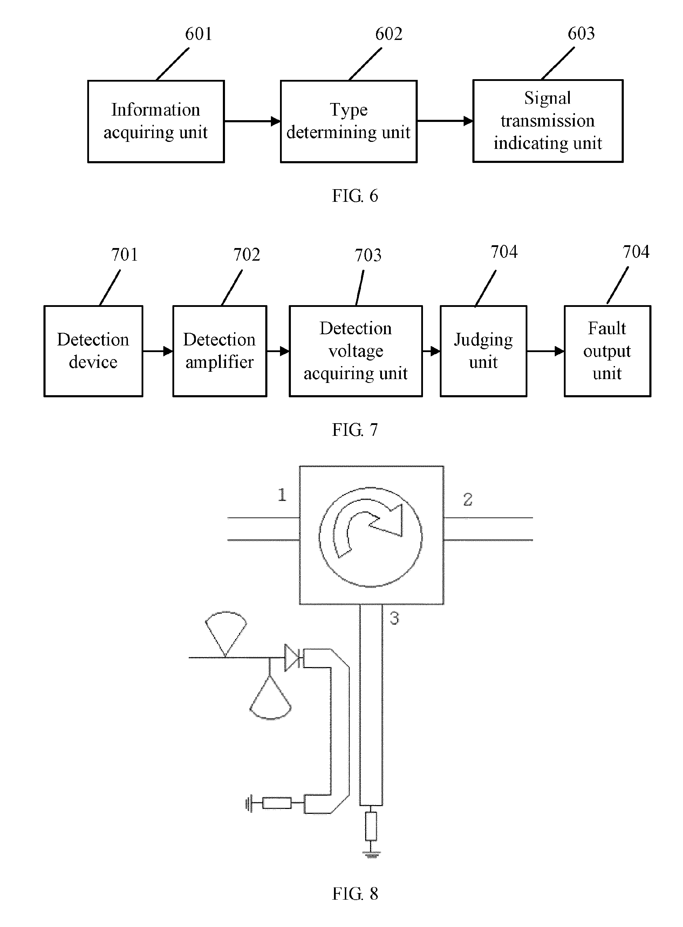

As shown in FIG 6, another device for duplexer fault detection is provided in an embodiment of the present invention to determine the type of the duplexer. The device includes: an information acquiring unit 601, a type determining unit 602, and a signal transmission indicating unit 603.

The information acquiring unit 601 is configured to acquire the detection voltage and detection frequency of the return wave signals of the duplexer when the ODU transmits detection microwave signals; the unit can acquire the return wave signals of the duplexer by the detection device as shown in FIG 10; acquire the detection voltage after the return wave signals are detection amplified by the detection amplifier; and finally, the information acquiring unit 601 acquires the detection voltage and frequency of the return wave signals of the duplexer.

The type determining unit 602 is configured to determine the type of the duplexer based on the detection voltage and detection frequency of the return wave signals, where the reference voltage and reference frequency can be preset in the reference threshold table, and the reference threshold table also includes the mapping relationship between the reference voltages and reference frequencies and the duplexer types, as shown in Table 1. The determination of the type of the duplexer is detailed described below with reference to Table 1 and FIG 11. The low level in Table 1 is a valid reference voltage value. That is, when the reference voltage is 0, the duplexer type corresponding to the reference voltage and corresponding reference frequency is the type of the detected duplexer.

FIG 11 shows a schematic diagram of passbands of two sub-bands of a pair of high/low pass filters in a duplexer. LOW refers to two sub-bands A and B of the low station of the duplexer, and High refers to two sub-bands A and B of the high station of the duplexer. f1 is a certain frequency of the sub-band A of the low station of the duplexer; f2 is a certain frequency of the sub-band B of the low station of the duplexer; f3 is a certain frequency of the sub-band A of the high station of the duplexer; f4 is a certain frequency of the sub-band B of the high station of the duplexer. For example, when the duplexer works in normal state, if the MCU indicates the ODU to transmit detection microwave signals in frequency f1 the detected frequency of the return wave signals of the detection microwave signals is f1 the electrical level of the return wave signals is low level 0, then it is determined that the type of the duplexer is A sub-band low station according to Table 1 (which provides the reference thresholds corresponding to high/low station and sub-band configurations of different duplexers); if the electrical level of the return wave signals is high level 1, the MCU continues to indicate the ODU to transmit microwave signals in frequency f2; if the electrical level is still high level 1, it is possible to transmit microwave signals in frequency f3 and f4 sequentially until the type of the duplexer is determined.

It is to be noted that the type determining unit in the above device includes:
a judging sub-unit, configured to judge whether the detection frequency of the return wave signals of the duplexer is the same as the reference frequency and whether the detection voltage of the return wave signals of the duplexer is the same as the reference voltage; and
a type determining sub-unit, configured to determine that the type of the detected duplexer is the same as the duplexer type corresponding to the reference voltage and reference frequency if the detection frequency is the same as the reference frequency and the detection voltage of the return wave signals of the duplexer is the same as the reference voltage.

The signal transmitting instruction unit 603 is configured to base on the determined duplexer type, indicate the ODU to transmit microwave signals to the input port of the duplexer in the sub-band frequency of the type of duplexer.

Based on the embodiment shown in FIG 6, another device for duplexer fault detection is provided in an embodiment of the present invention, as shown in FIG 7, to detect the performance of the duplexer on line. The device can further includes:
a detection device 701, configured to acquire return wave signals from the duplexer;
a detection amplifier 702, configured to perform detection amplification on the acquired return wave signals, and acquire the detection voltage;
a detection voltage acquiring unit 703, configured to receive the detection voltage of the return wave signals of the duplexer, the return wave signals being a part of the reflection signals generated at the input port of the duplexer by microwave signals that are input at the input port of the duplexer;
a judging unit 704, configured to judge whether the detection voltage of the return wave signals exceeds the reference threshold; and
a fault output unit 705, configured to determine that the duplexer is faulty if the detection voltage of the return wave signals exceeds the reference threshold.

As shown in FIG 8, a detection device is provided in an embodiment of the present invention. The device includes:
a directional coupler, configured in the ODU at the absorbing load side connected to the surface mounted circulator and configured to couple a portion of the reflection signals generated at the input port of the duplexer; and
a microwave detector, configured at the coupling end of the directional coupler and configured to perform detection on the coupled reflection signals and acquire the return wave signals of the duplexer. The detection device can be configured at port 3 of the surface mounted circulator of the micro-strip interface. The directional coupler comprises coupling micro-strip lines, and the microwave detector comprises detection diodes, as shown in FIG 8. When the ODU adopts the surface mounted circulator, the detection device of the duplexer fault detection device which is used for acquiring the return wave signals can acquire samples of the return wave signals by adding the directional coupler and the microwave detector at the absorbing load port side of the surface mounted circulator.

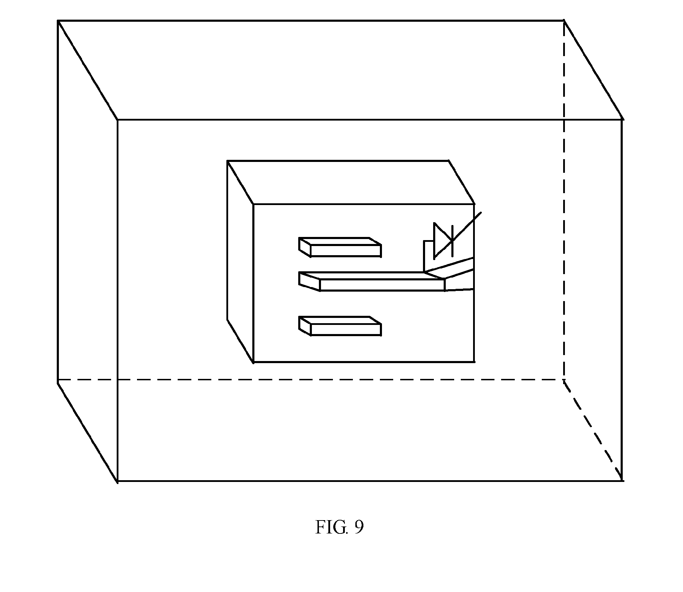

As shown in FIG 9, another detection device is provided in an embodiment of the present invention. The detection device includes a detection tube, it is configured in the absorption cavity of the waveguide isolator of the ODU and educes the signals detected by the detection tube by conductors. The detection device can be used in waveguide circulators. When the ODU adopts the waveguide isolator, the detection device of the duplexer fault detection device which is used for acquiring the return wave signals can acquire samples of the return wave signals by configuring the detection tube in the absorption cavity of the waveguide isolator, and educe the detection voltage namely the samples.

FIG 10 shows a schematic structural diagram of an ODU that implements online detection of the duplexer provided in an embodiment of the present invention. The ODU includes a transmission end and a receiving end. The transmission end further includes mixer S1, transmitter local frequency source S2, filter S3, driver amplifier S4, voltage-controlled attenuator S5, power amplifier S6, circulator S7, directional coupling detector S8, detection amplifier S9, duplexer S10, detection device S11, detection amplifier S12, and MCU S13. The receiving end further includes filter S 14, mixer S 15, receiver local frequency source S16, and low-noise amplifier S17.

At the transmitting side: First, the ODU receives the IF signals transmitted by the IDU. Then, the IF signals and microwave local oscillation signals are mixed by mixer S1 to generate microwave signals. The microwave local oscillation signals are generated by transmitter local frequency source S2 controlled by the MCU. Filter S3 filters spurious waves of the microwave signals and transmits the microwave signals to driver amplifier S4, voltage-controlled attenuator S5, and power amplifier S6, and then to the transmitting port of the duplexer through port 2 of circulator S7. Finally, the microwave signals are transmitted through the antenna ports after passing through the transmission filter of the duplexer S10. The directional coupling detector S8 at port 2 of the circulator is configured to couple a portion of the transmission signal energies. The detection voltage is acquired by a detector. Then the detection voltage is amplified by detection amplifier S9 and used as the feedback quantity of the transmission link AGC loop. In this way, voltage-controlled attenuator S5 of the transmission link is dynamically controlled to ensure that the transmission power is fixed at the power preset on the MCU.

Port 3 of circulator S7 is connected with the absorbing load S 18 to form an isolator. The isolator is configured to ensure unidirectional transmission of transmitting signals and improve the matching of the power amplifier S6 and the duplexer S7 during cascading.

The detection device S11 is configured to detect the return wave signals at the input port of the transmitting end of the duplexer reflected by the circulator.

It is to be noted that the detection device is chosen depending on the type of the circulator. For example, the detection device as shown in FIG 8 is configured at port 3 of a micro-strip interface surface mounted circulator; the detection device as shown in FIG 9 is configured for waveguide circulator.

The MCU may further include:
a detection voltage acquiring unit, configured to receive the detection voltage of the return wave signals of the duplexer, where the return wave signals are a portion of the reflection signals generated at the input port of the duplexer by microwave signals that are input at the input port of the duplexer, and the process of acquiring the detection voltage of the return wave signals of the duplexer by the detection voltage acquiring unit is: first, acquiring the return wave signals of the duplexer by the detection device that is configured at port 3 of the circulator as shown in FIG 10; then, performing detection amplification on the acquired return wave signals by a detection amplifier, acquiring the detection voltage of the return wave signals, and finally, sending the detection voltage of the return wave signals to the detection voltage acquiring unit;
a judging unit, configured to judge whether the detection voltage of the return wave signals exceeds the reference threshold, where the reference threshold can be preset in the reference threshold table. When the duplexer works in normal state, the return wave signals are weak. Thus, the detection voltage of the return wave signals is low. When the return wave signals are strong, the detection voltage acquired by the MCU is high. If the detection voltage exceeds the reference threshold preset in the MCU, it is determined that the duplexer is faulty; and
a fault output unit, configured to determine that the duplexer is faulty if the detection voltage of the return wave signals exceeds the reference threshold.

For the purpose of determining the type of the duplexer, the MCU may further include:
an information acquiring unit, configured to acquire the detection voltage and detection frequency of the return wave signals of the duplexer when the ODU transmits detection microwave signals; the unit can acquire the return wave signals of the duplexer by the detection device as shown in FIG 10; performs detection amplification on the return wave signals by a detection amplifier and acquires the detection voltage; and finally the information acquiring unit acquires the detection voltage and detection frequency of the return wave signals of the duplexer; and
a type determining unit, configured to determine the type of the duplexer based on the detection voltage and detection frequency of the return wave signals, where the detection frequency of the return wave signals for determining the duplexer type is the same as the detection frequency of the return wave signals for determining the duplexer is faulty. The reference voltage and reference frequency can be preset in the reference threshold table, and the reference threshold table also includes the mapping relationship between the reference voltages and reference frequencies and the duplexer types, as shown in Table 1. The determination of the type of the duplexer is detailed described below with reference to Table 1 and FIG 11. The low level in Table 1 is a valid reference voltage value. That is, when the reference voltage is 0, the duplexer type corresponding to the reference voltage and corresponding reference frequency is the type of the detected duplexer.

FIG 11 shows a schematic diagram of passbands of two sub-bands of a pair of high/low pass filters in a duplexer. LOW refers to two sub-bands A and B of the low station of the duplexer, and High refers to two sub-bands A and B of the high station of the duplexer. f1 is a certain frequency of the sub-band A of the low station of the duplexer; f2 is a certain frequency of the sub-band B of the low station of the duplexer; f3 is a certain frequency of the sub-band A of the high station of the duplexer; f4 is a certain frequency of the sub-band B of the high station of the duplexer. For example, when the duplexer works in normal state, if the MCU indicates the ODU to transmit detection microwave signals in frequency f1 the detected frequency of the return wave signals of the detection microwave signals is f1 the electrical level of the return wave signals is low level 0, then it is determined that the type of the duplexer is A sub-band low station according to Table 1 (which provides the reference thresholds corresponding to high/low station and sub-band configurations of different duplexers); if the electrical level of the return wave signals is high level 1, the MCU continues to indicate the ODU to transmit microwave signals in frequency f2; if the electrical level is still high level 1, it is possible to transmit microwave signals in frequency f3 and f4 sequentially until the type of the duplexer is determined.

It is to be noted that the type determining unit in the above device includes:
a judging sub-unit, configured to judge whether the detection frequency of the return wave signals of the duplexer is the same as the reference frequency and whether the detection voltage of the return wave signals of the duplexer is the same as the reference voltage;
a type determining sub-unit, configured to determine that the type of the detected duplexer is the same as the duplexer type corresponding to the reference voltage and reference frequency if the detection frequency is the same as the reference frequency and the detection voltage of the return wave signals of the duplexer is the same as the reference voltage; and
a signal transmitting instruction unit, configured to indicate the ODU to transmit microwave signals to the input port of the duplexer in the sub-band frequency of the type of duplexer.

At the receiving side: the antenna receives microwave signals and sends the received microwave signals to the receiving port of the duplexer through the receiving filter of the duplexer S10. Then, the microwave signals are amplified by low-noise amplifier S17. The amplified microwave signals are mixed with the local oscillation signals of the receiver local oscillator S16 in mixer S 15. Finally, the mixed microwave signals are down-converted to IF signals by filter S 14 and sent to the IDU through the IF cables.

A method and a device for duplexer fault detection are provided in an embodiment of the present invention to acquire the detection voltage of the return wave signals of the duplexer, judge that the detection voltage exceeds the reference threshold, and determine that the duplexer is faulty. The return wave signals at the port of the duplexer can be acquired using the directional coupler and microwave detector of the detection device. The directional coupler is configured in the ODU at the absorbing load side connected to the surface mounted circulator. The microwave detector is configured at the coupling side of the directional coupler. The return wave signals at the port of the duplexer can also be acquired using the detection tube. The detection tube is configured in the absorption cavity of the waveguide isolator of the ODU and educes the signals detected by the detection tube by conductors. In this way, by comparing the detection voltage of the return wave signals and the reference threshold, if the detection voltage exceeds the reference threshold, then it is determined that the duplexer is faulty. This implements online detection of the duplexer's performance.

With the description of the above implementations, it is understandable to those ordinary skilled in the art that all or part of the steps in the foregoing embodiments may be performed through hardware instructed by a program. The program may be stored in a computer-readable storage medium such as ROM/RAM, magnetic disk, and compact disk. When being executed, the program performs the steps described in foregoing embodiments.

Details above are the implementations of the present invention. Although the invention is described through some exemplary embodiments, the invention is not limited to such embodiments. Any variations or replacement that can be easily derived by those skilled in the art shall fall within the protection scope of the present invention. Therefore, the protection scope of the present invention is subject to the appended claims.

## Claims

1. A method for duplexer fault detection, comprising:
receiving detection voltage of return wave signals of a duplexer, the return wave signals being part of reflection signals generated at an input port of the duplexer by microwave signals that are input at the input port of the duplexer;
judging whether the detection voltage of the return wave signals exceeds a reference threshold; and
determining that the duplexer is faulty if the detection voltage of the return wave signals exceeds the reference threshold.

2. The method for duplexer fault detection according to claim 1, before receiving the detection voltage of the return wave signals of the duplexer, further comprising:
acquiring the detection voltage and detection frequency of the return wave signals of the duplexer when an Outdoor Unit (ODU) transmits the microwave signals;
determining a type of the duplexer based on the detection voltage and the detection frequency of the return wave signals; and
indicating the ODU to transmit the microwave signals to the input port of the duplexer in a sub-band frequency of the determined type of the duplexer.

3. The method for duplexer fault detection according to claim 2, where the determining of the type of the duplexer based on the detection voltage and the detection frequency of the return wave signals comprises:
judging whether the detection frequency of the return wave signals of the duplexer is the same as a reference frequency and whether the detection voltage of the return wave signals of the duplexer is the same as a reference voltage; and
determining that the type of the detected duplexer is the same as a duplexer type corresponding to the reference voltage and the reference frequency if the detection frequency is the same as the reference frequency and the detection voltage of the return wave signals of the duplexer is the same as the reference voltage.

4. The method for duplexer fault detection according to any one of claims 1 to 3, wherein the acquiring of the detection voltage of the return wave signals of the duplexer comprises:
acquiring the return wave signals of the duplexer by a detection device; and
performing detection amplification on the acquired return wave signals by a detection amplifier and acquiring the detection voltage of the return wave signals.

5. A device for duplexer fault detection, comprising:
a detection voltage acquiring unit, configured to receive detection voltage of return wave signals of a duplexer, the return wave signals being part of reflection signals generated at an input port of the duplexer by microwave signals that are input at the input port of the duplexer;
a judging unit, configured to judge whether the detection voltage of the return wave signals exceeds a reference threshold; and
a fault output unit, configured to determine that the duplexer is faulty if the detection voltage of the return wave signals exceeds the reference threshold.

6. The device for duplexer fault detection according to claim 5, further comprising:
an information acquiring unit, configured to acquire the detection voltage and detection frequency of the return wave signals of the duplexer when an Outdoor Unit (ODU) transmits the microwave signals;
a type determining unit, configured to determine a type of the duplexer based on the detection voltage and the detection frequency of the return wave signals; and
a signal transmitting instruction unit, configured to instruct the ODU to transmit the microwave signals to the input port of the duplexer in a sub-band frequency of the determined type of the duplexer.

7. The device for duplexer fault detection according to claim 6, wherein the type determining unit comprises:
a judging sub-unit, configured to judge whether the detection frequency of the return wave signals of the duplexer is the same as a reference frequency and whether the detection voltage of the return wave signals of the duplexer is the same as a reference voltage; and
a type determining sub-unit, configured to determine that the type of the detected duplexer is the same as a duplexer type corresponding to the reference voltage and the reference frequency if the detection frequency is the same as the reference frequency and the detection voltage of the return wave signals of the duplexer is the same as the reference voltage.

8. The device for duplexer fault detection according to any one of claims 5 to 7, further comprising:
a detection device, configured to acquire the return wave signals of the duplexer; and
a detection amplifier, configured to perform detection amplification on the acquired return wave signals, and acquire the detection voltage.

9. The device for duplexer fault detection according to claim 8, wherein the detection device comprises:
a directional coupler, configured in the ODU at an absorbing load side connected to a surface mounted circulator and configured to couple part of the reflection signals generated at the input port of the duplexer; and
a microwave detector, configured at a coupling end of the directional coupler and configured to perform detection on the coupled reflected signals and acquire the return wave signals of the duplexer.

10. The device for duplexer fault detection according to claim 8, wherein the detection device comprises:
a detection tube, configured in an absorption cavity of a waveguide isolator of the ODU and configured to educe signals detected by the detection tube through conductors.
